# EUROPEAN PATENT SPECIFICATION

(11) **EP 2 734 788 B1**
(45) Date of publication and mention of the grant of the patent: **09.12.2015**
(21) Application number: 12750851.3
(22) Date of filing: 20.07.2012
(51) Int. Cl.: F24D 11/00, F24D 17/00

(54) **HEAT EXCHANGE SYSTEM WITH A BATTERY BASED ON ELECTROLYTE**
WÄRMEAUSTAUSCHSYSTEM MIT EINEM BATTERIE AUF ELEKTROLYTBASIS
SYSTÈME D'ÉCHANGE DE CHALEUR COMPRENANT UNE BATTERIE BASÉ SUR UN ÉLECTROLYTE

(30) Priority: 20.07.2011 NL 2007150
(43) Date of publication of application: 28.05.2014
(73) Proprietor: Flamco B.V., 3751 LJ Bunschoten (NL)
(72) Inventor: CNOSSEN, Jan, Henk, NL-8723 CP Koudum (NL); DEVLIN, Terence, Arthur, NL-7312 AP Apeldoorn (NL)
(74) Representative: Grootscholten, Johannes A.M.
(86) International application number: PCT/NL2012/050523
(87) International publication number: WO 2013/012336

(56) References cited:
- WO-A1-2010/042659
- GB-A- 2 135 112
- US-A- 3 649 467
- US-A- 4 650 732
- US-A1- 2010 003 545

## Description

The present invention relates to a system comprising a battery based on electrolyte, such as a regenerative fuel cell; and at least one electrolyte storage from which electrolyte flows during operation along a membrane in the battery, and at least one heat exchanger in the electrolyte storage.

Such systems are generally known. Acknowledged more particularly as prior art is US-2010/0003545, compared to which at least the features in the characterizing part of the single appended independent claim are new. The disclosure of the configuration known herefrom is wholly aimed at, and limited to, regulation of the temperature of the electrolyte in the electrolyte storage for functioning of the electrolyte in the battery for the purpose of supplying electric power and converting electric to chemical power and vice versa, in order to fulfill the function as battery.

Determined embodiments of batteries are known as redox flow fuel cells. Other batteries to which the invention can relate are: lead acid batteries, sodium-sulphur (NaS) batteries, zinc bromide flow batteries, vanadium redox flow batteries, metal-air batteries and so on. In for instance redox flow fuel cells electrolyte is carried along a membrane, preferably an ion-selective membrane, in order to convert electrical energy to chemical energy, and vice versa. A type II redox flow fuel cell utilizes two electrolyte flows; a type III redox flow fuel cell utilizes one flow of electrolyte and one flow of air, such as outside air.

According to the invention a system further comprises, in addition to the at least one heat exchanger in the electrolyte storage, a heat pump as defined in the single appended independent claim. The electrolyte can thus be utilized in highly favourable manner as heat buffer for useful applications of heat from outside the electrolyte storage, which heat can be stored in the electrolyte storage. No indication whatsoever of the use of a heat pump is, to the best knowledge of the inventors, to be found in the art relating to batteries operating with electrolyte. The extraction of heat from the electrolyte storage moreover runs counter to the disclosure in US-2010/0003545, according to which the supply or discharge of heat is based wholly on a heat requirement in the electrolyte in the storage with a view to the operation of the battery, and not for any purpose or motivation for using heat to be extracted from the storage for useful applications other than the operation of the battery. Heat and electricity can be buffered together here in a single system according to the invention, and the heat and the electricity can also be extracted separately or simultaneously therefrom in order to be utilized effectively.

It is noted here that determined embodiments of batteries based on electrolyte require heating of the electrolyte for proper functioning thereof, this being the case for instance with sodium-sulphur (NaS) batteries in determined applications thereof. Such batteries are thus used to compensate the fluctuating electricity supply from wind and sun. These batteries have to be heated to enable optimum performance. In a system according to the invention this heating can take place to a temperature above the operating temperature of these batteries, preferably with renewable energy, such as from a photovoltaic solar panel or a thermal solar panel or the like, in order to then be able to extract and utilize heat therefrom as required so that heating of such batteries does not detract from the effective operation of the battery.

An object of such a configuration according to the invention could be a multi-energy system (MES), with which buildings could be made self-sufficient, self-supporting or energy-neutral on the basis of diverse energy sources and storage of electrical and thermal energy obtained therefrom, precisely through use according to the invention of the heat pump in the system in order to store heat in the electrolyte vessel, not only to keep the electrolyte at an operating temperature but also to enable heat stored in the electrolyte storage to be made available for useful applications. It has been found that temperatures in the electrolyte sufficiently high for instance to provide hot tap water could not be realized on the basis of a prior art system. Diverse attempts have been made to improve the temperature stability of the electrolyte, for instance by applying additives in or on the electrolyte, but these also had immediate adverse consequences for the properties in respect of the storage of electrical energy in the battery, particularly in the case relatively considerable quantities of additive were added for the purpose of improving the temperature stability of the electrolyte, and/or other drawbacks. This does not however mean that, according to the present invention, an additive cannot also be added to the electrolyte. Another predictable approach, in the light of the above stated prior art, would have been to seek out electrolytes with better temperature stability as an alternative to current electrolytes.

It is known of heat pumps that they can be efficient when a difference in temperature between a heat source - in this case the electrolyte of the battery - and the point of heat generation is not very large. It is precisely this in prior art systems which demonstrates the inventiveness of the measure taken according to the present invention.

Use can be made in an embodiment of material which can change phase, whereby - despite the small difference in temperature - a thermal storage capacity is significantly increased.

Using the heat pump, heat stored in the electrolyte storage can be provided for purposes other than merely maintaining an operating temperature required for application as electric battery, at temperatures which are desirable or can be used for the useful application.

In addition, the system according to the invention exhibits the feature that at least an electrically driven component of the heat pump is connected electrically to the battery, and the battery provides electric DC power to the heat pump. According to the invention, the compressor of the heat pump is a DC motor powered with direct current or voltage which is supplied by the battery. In per se known heat pumps use is made substantially of AC motors for compressors, these motors then being connected to the electricity grid. Connection of at least the compressor motor of the heat pump to the electrical connection of the battery can avoid losses due to DC-AC conversion - which can soon amount to 5 to 10% and more particularly to usually about 7 to 8% - and is exceptionally efficient in bringing about substantially at least approximately autonomous operation of the heat pump in association with the battery as system according to the invention.

Within the thus outlined scope of the invention many additional and alternative embodiments are possible which will become apparent from the description below of several specific embodiments, determined aspects of which may also be defined in the dependent claims.

The system can have the feature that the heat exchanger is connected to a heating element such as a radiator, and/or to a hot water supply such as a shower, and/or to a heat source such as a solar panel. These are in each case a heat-demanding or generating element or component which can be connected to the heat exchanger. Also possible however is storage of heat in the electrolyte in order to supply heat to heat-generating components, for instance for the purpose of preheating tap water in a reservoir of a boiler, for which heat stored temporarily in the electrolyte can be used, which heat can be supplied by the boiler itself to the electrolyte.

In an additional or alternative embodiment the system according to the invention can have the feature that the heat exchanger is connected to a feed connected to outside air. This is particularly an option in an embodiment of a battery in the form of a fuel cell of the redox III type. It can be favourable here for the feed to form the entrance of a channel having a heat exchanger therein for passage of an airflow. It can in turn be favourable here for the airflow to flow along the membrane.

In an embodiment having at least a heat exchanger connected to outside air it can be favourable if this has the further feature of an impeller associated with the feed for providing at the feed a volume flow of outside air sufficient for a heat exchanger along or through the heat exchanger for the purpose of extracting heat and/or cold therefrom.

In an additional or alternative embodiment the system according to the invention can have the feature that the battery based on electrolyte is one from the group comprising: lead acid batteries, sodium-sulphur (NAS) batteries, zinc bromide flow batteries, vanadium redox flow batteries, metal-air batteries; regenerative redox flow fuel cells; and so on.

In an additional or alternative embodiment the system according to the invention can have the feature that an additive is added to the electrolyte, the additive being taken from the group comprising: glycerol, mannitol, fructose and D-sorbitol. The temperature stability of the electrolyte can hereby be improved to at least some extent, and temperatures in or of the electrolyte which are to at least some extent higher can be realized.

In an additional or alternative embodiment the system according to the invention can have the feature that the battery comprises an ion-selective membrane.

Two embodiments of a system according to the present invention will be described hereinbelow by way of example with reference to the associated figures, wherein the same or similar parts, components and aspects may be designated with the same reference numerals, and in which:
Figure 1 shows a schematic overview of a system according to the invention; and
Figure 2 shows an alternative embodiment of a system according to the invention.

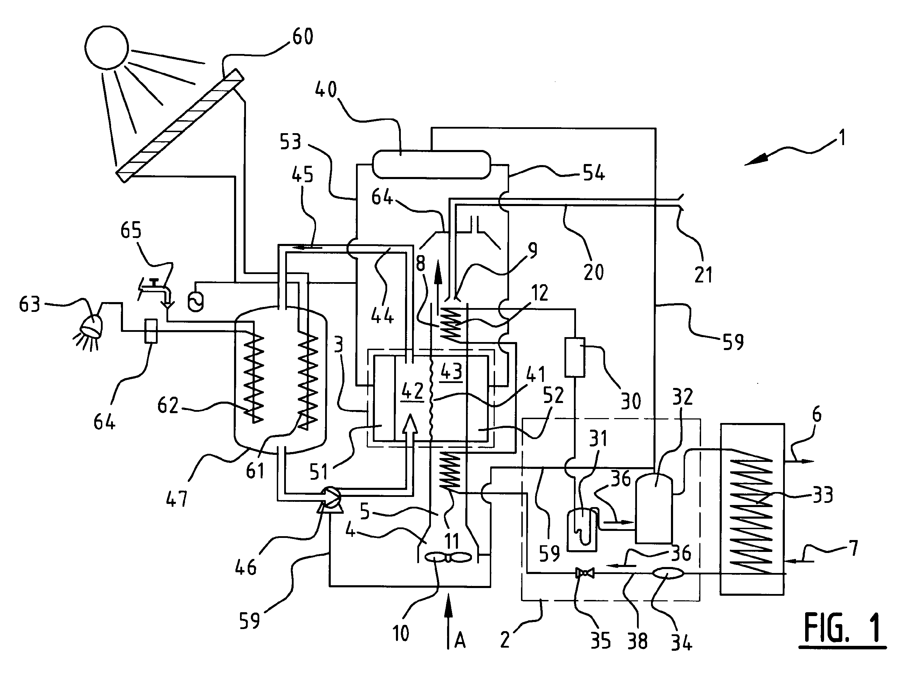

Figure 1 shows a system 1 which makes it possible for heat pump 2 (indicated by means of broken lines) - operating with air, preferably outside air, as heat (or cold) source - to realize the thermal energy required for the conversion of heat (or cold) .

In addition, the outside air is ionized by means of a fuel cell 3, as embodiment of a battery, together with an electrolyte storage 47. In storage 47 an additive is or can be added to the electrolyte, the additive being taken from the group comprising: glycerol, mannitol, fructose and D-sorbitol, or another additive for increasing the temperature stability of the electrolyte and for improving the efficiency through association with the heat pump.

Heat pump 2 extracts heat (or cold) from (preferably) outside air. The outside air is guided via a feed 4 into channel 5. Heat pump 2 converts this to usable heat (or cold) for the user for the purpose of heating (or cooling) spaces via feed conduit 6 and return conduit 7 and/or hot tap water. The system can be placed for this purpose in the vicinity of a living area.

Although shown with fan 10, the presence thereof is not essential in some embodiments, for instance when the air flow is already in motion relative to feed 4, for instance when system 1 is placed on a moving vehicle.

Sufficient outside air should always flow in forced manner through or along a heat exchanger (evaporator) 11, 12 in order to be able to collect the heat required for the heat generation process for heat exchanger 11, 12 of heat pump 2.

A fan 10 is usually applied for this purpose. It is also possible to operate with an alternative as according to NL 2004089.

The open outer ends of channel 5, which takes the form of a tube, form the feed 4 and the discharge 8, and in an embodiment have a direct connection to the outside air.

A second discharge 9 can also be present which collects a part of the airflow in channel 5 and guides it via a channel 20 to an outlet 21. The air collected in second discharge 9 is ionized as a result of fuel cell 3. The ionized air can hereby be carried to a second space, for instance as fresh air to a living space. This in fact provides an ion generator. The collected and transported negative ions have a favourable effect on human well-being.

According to the shown embodiment heat pump 2 comprises two heat exchangers 11 and 12 placed respectively upstream and downstream of fuel cell 3 in channel 5.

In this embodiment heat pump 2 further comprises a gas-liquid separator 31, a compressor 32, heat exchanger 33, a filter 34 and a control valve 35, all connected via a channel 38 in which a partially liquid medium can be received. The general flow direction 36 is indicated with arrows.

Compressor 32 can be connected via a connection 59 to a power supply 40. Direct current (DC) extracted from battery 3 is supplied via power supply 40 and a connection 59 to the compressor. Compressor 32 comprises in the usual manner an electric motor, which is according to the invention a DC motor, so that it can be provided via power supply 40 with electrical DC power from battery 3. The power supply/distributor 40 can additionally be connected to an external power source (not shown).

Fuel cell 3 is a regenerative fuel cell or flow fuel cell. The sides 42, 43 separated by an ion-selective membrane 41 are both adapted as flow channels.

In the shown embodiment side 43 forms part of channel 5. Air flowing through channel 5 in the direction of arrow A comes into contact with membrane 41.

Side 42 forms part of an electrolyte channel 44 in which is received a suitable electrolyte which can be pumped in a direction 45 by means of a suitable pump 46. Channel 44 is connected here to the electrolyte storage 47 in the form of a vessel.

Pump 46 and/or fan 10 can also be connected via connection 59 to power supply/distributor 40, as can the (unshown electric motor of) compressor 32 of heat pump 2.

In order to obtain a type III redox flow fuel cell operation can take place with vanadium dissolved in sulphuric acid as electrolyte. Other suitable electrolytes can also be used if these electrolytes enable the ionization of outside air on side 43.

For the purpose of generating electricity the electrolyte is guided through the regenerative fuel cell 3. Electrodes 51, 52 are connected to the flowing media. In addition, the current is conducted via suitable electrical connections 53, 54 to unit 40 which can act as distributor.

The electrolyte storage 47 in the vessel forms a heat buffer for storage of heat which can be obtained with a thermal solar panel 60. The thermal solar panel 60 is connected for this purpose to a heat exchanger 61 in electrolyte storage 47. Also arranged therein is a further heat exchanger 62 which, by means of water from conduit system 65, takes up heat from the electrolyte and delivers heated water to a hot water installation, such as a shower 63 in the example shown here, optionally via a heating boiler 64.

A direct connection (for instance not via power supply/distributor 40) can optionally be made to at least one of the electrically driven components of heat pump 2, such as an electric motor or more particularly the DC motor of compressor 32. Using such a direct connection direct current can be supplied from the electrodes to the at least one of the electrically driven components of the heat pump. Such a direct connection or a connection via power supply/distributor 40 of the at least one of the electrically driven components of heat pump 2 to the electrical connection of battery 3 can avoid losses due to DC-AC conversion - which can soon amount to 5 to 10%, and more particularly to usually about 7 to 8% - and exceptionally efficient operation of the heat pump can be realized.

In an embodiment the flow direction of the liquid electrolyte and of the outside air is the same, as shown in figure 1. In another embodiment the flow direction in cell 3 is reversed.

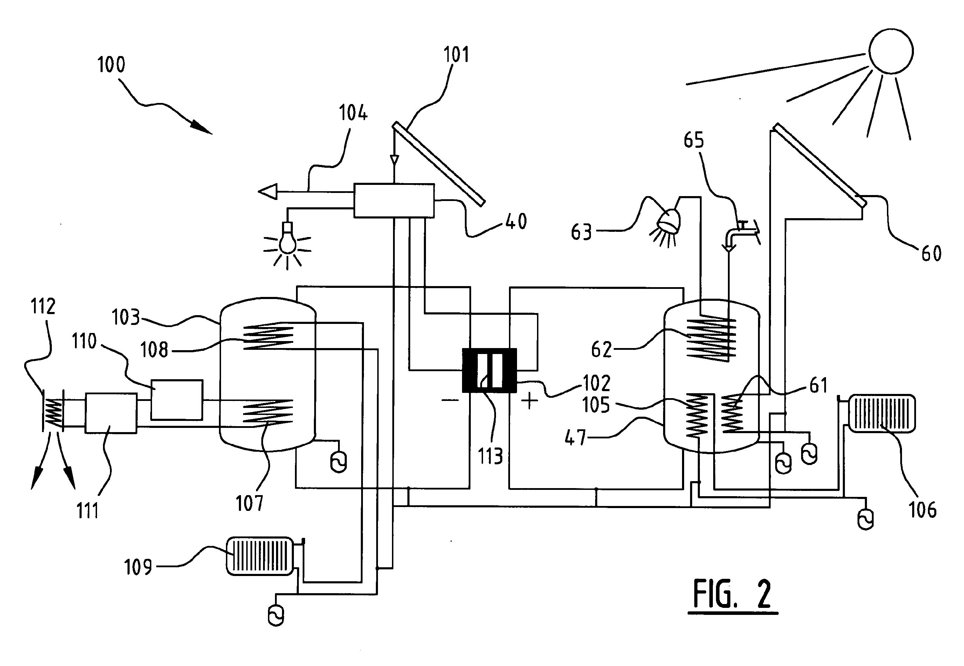

Distributor 40 can also be connected to a further electricity network as indicated in figure 2. When system 1 produces more power, a part of this power can be generated to the electricity network.

In an embodiment water released in the channel as a result of the chemical reaction is collected. A suitable collecting mechanism can be applied. Figure 1 shows schematically a collector 64 close to discharge 8 of channel 5. Water can be collected in collector 64.

In an embodiment it is possible to moisten the outside air before it reaches fuel cell 3. A unit for moistening the outside air can be added to the channel.

It is noted that in the alternative embodiment of figure 2 the same components are not numbered and described again in each case. Operation will be apparent on the basis of the description of figure 1.

In the embodiment of a system 100 according to the present invention shown in figure 2 additional electric power is generated by means of a photovoltaic solar panel 101. The photovoltaic solar panel 101 is connected to distributor 40 in order to provide it with electric power and, via distributor 40, also to the other components and elements of the system such as the regenerative fuel cell 102, here of the redox flow battery type. Distributor 40 also provides for delivery of a quantity of the electric power generated by fuel cell 102 and/or the photovoltaic solar panel 101 to the electricity grid 104, so making a contribution thereto.

The type of fuel cell applied in the embodiment of figure 2 is based on the use of two storages with electrolyte 47 and 103. Electrolyte flows along membrane 113 which keeps these flows separated. The passage of channel 5 of the embodiment of figure 1 is thus replaced in that of figure 2 by a vessel with electrolyte 103. The first vessel with electrolyte 47 comprises heat exchangers 61 and 62 which are connected to respectively the thermal solar panel 60 and shower 63, and a further heat exchanger 105 is added which is connected to a heating element 106, preferably via a heat pump (not shown in association with vessel 47 with electrolyte), electrical components of which, such as a compressor (not shown), can be supplied with energy, preferably direct voltage, from the fuel cell 102 functioning as battery.

The other vessel with electrolyte 103 comprises two heat exchangers 107 and 108, one of which is also connected to a heating element 109 such as a radiator for heating a space. The other heat exchanger 107 in the vessel with electrolyte 103 is connected, via a container 110 having therein material which can change phase and a heat pump 111 supplied with heat optionally from the air, to a channel 112 which in this embodiment therefore plays no part in the process associated with the regenerative fuel cell 102. In the embodiment of figure 2 the heat pump 111 also comprises a (not specifically shown) compressor with an electric motor (not shown), which according to the invention is a DC motor powered directly or indirectly from battery 102.

Each of the two storages with electrolyte 47 and 103 forms a heat buffer as supplement to the use for generating or storing electrical energy. It is likewise possible for only one of the two storages 47 or 103 to be utilized for this purpose. In an embodiment which is not shown a heat transport can be provided between the vessels in order to keep electrolytes 47 and 103 at the same temperature. Conversely, it is possible to seek after differences in temperature between the vessels with the electrolytes so as to utilize for instance one of the two for cooling and the other for heating.

It will be apparent to the skilled person that different embodiments are possible within the scope of the invention as defined in the claims. A system according to the invention thus need not have all of the connections as shown for instance in figure 2, and connections other than those which are shown and/or described in detail can also be realized.

## Claims

1. A system comprising:
- a battery based on electrolyte, such as a regenerative fuel cell (3; 102);
- at least one electrolyte storage (47; 103) from which electrolyte flows during operation along a membrane (41) in the battery;
- at least one heat exchanger (61; 62, 105; 107; 108) in the at least one electrolyte storage,
**characterized in that**:
- a heat pump (2,111) with a compressor (32) driven by an electric motor;
- the at least one heat exchanger (61; 62, 105; 107; 108) is connected to the heat pump (2; 111), which heat pump (2; 111) is connected to a thermal source (60; 112) for heat or cold storage in the electrolyte, and wherein the heat pump (2; 111) is further connected to a useful heat or cold application device (63; 106) using the heat or cold extracted from the at least one storage by the at least one combined heat exchanger and heat pump; and
- the electrical motor of compressor (32) of the heat pump (2; 111) is a DC motor and is connected electrically to the battery (3; 102), wherein the battery provides electric DC power to the electric DC motor of compressor (32) of the heat pump (2; 111).

2. The system as claimed in claim 1, wherein the at least one heat exchanger can at least be connected via the heat pump (2; 111) to a heating element forming a useful application of heat, such as a radiator (106).

3. The system as claimed in claim 1 or 2, wherein the at least one heat exchanger can at least be connected via the heat pump (2; 111) to a hot water supply forming a useful application of heat, such as a shower (63).

4. The system as claimed in at least one of the foregoing claims, wherein the at least one heat exchanger is connected via the heat pump (2; 111) to the thermal source, such as a thermal solar panel (60).

5. The system as claimed in at least one of the foregoing claims further comprising a feed, wherein a heat exchanger is connected to the feed (5; 112) connected to outside air.

6. The system as claimed in claim 5, wherein the feed forms the entrance of a channel having a heat exchanger (11, 12) therein for passage of an airflow.

7. The system as claimed in claim 6, wherein the airflow flows along the membrane (41).

8. The system as claimed in at least one of the claims 5 and 6 and 7, further comprising an impeller (10) associated with the feed for providing at the feed a volume flow of outside air sufficient for a heat exchanger (11, 12) along or through the heat exchanger for the purpose of extracting heat and/or cold therefrom.

9. The system as claimed in at least one of the foregoing claims, wherein the battery is one from the group comprising: lead acid batteries, sodium-sulphur (NAS) batteries, zinc bromide flow batteries, vanadium redox flow batteries, metal-air batteries; regenerative redox flow fuel cells (3; 102).

10. System as claimed in any of the foregoing claims, wherein an additive is added to the electrolyte, the additive being taken from the group comprising: glycerol, mannitol, fructose and D-sorbitol.

11. System as claimed in any of the foregoing claims, wherein the fuel cell comprises an ion-selective membrane.

## Patentansprüche

1. System mit:
- einer auf einem Elektrolyt basierenden Batterie, wie beispielsweise eine regenerative Brennstoffzelle (3; 102);
- zumindest einem Elektrolytspeicher (47; 103), aus dem während eines Betriebs ein Elektrolyt entlang einer Membran (41) in der Batterie fließt;
- zumindest einem Wärmetauscher (61; 62, 105; 107; 108) in dem zumindest einen Elektrolytspeicher,
**dadurch gekennzeichnet, dass**:
- eine Wärmepumpe (2; 111) mit einem durch einen elektrischen Motor angetriebenen Kompressor (32) vorhanden ist;
- der zumindest eine Wärmetauscher (61; 62, 105; 107; 108) mit der Wärmepumpe (2; 111) verbunden ist, wobei die Wärmepumpe (2; 111) mit einer thermischen Quelle (60; 112) zur Wärme- oder Kältespeicherung in dem Elektrolyt verbunden ist, und wobei die Wärmepumpe (2; 111) des Weiteren mit einem nutzbaren Wärme- oder Kälteanwendungsgerät (63; 106) verbunden ist, das die von dem zumindest einen Speicher durch den zumindest einen kombinierten Wärmetauscher mit Wärmepumpe extrahierte Wärme oder Kälte nutzt; und
- der elektrische Motor des Kompressors (32) der Wärmepumpe (2; 111) ein Gleichstrommotor ist, der elektrisch mit der Batterie (3; 102) verbunden ist, wobei die Batterie dem elektrischen Gleichstrommotor des Kompressors (32) der Wärmepumpe (2; 111) elektrische Gleichstromleistung zuführt.

2. System nach Anspruch 1, wobei der zumindest eine Wärmetauscher zumindest über die Wärmepumpe (2; 111) mit einem Wärmeelement verbunden werden kann, das eine nutzbare Anwendung der Wärme bildet, wie beispielsweise ein Radiator (106).

3. System nach Anspruch 1 oder 2, wobei der zumindest eine Wärmetauscher zumindest über die Wärmepumpe (2; 111) mit einer Heißwasserzufuhr verbunden werden kann, die eine nutzbare Anwendung der Wärme bildet, wie beispielsweise eine Dusche (63).

4. System nach einem der vorhergehenden Ansprüche, wobei der zumindest eine Wärmetauscher über die Wärmepumpe (2; 111) mit der thermischen Quelle verbunden ist, wie beispielsweise ein thermisches Solarelement (60).

5. System nach zumindest einem der vorhergehenden Ansprüche, des Weiteren umfassend eine Zuführung, wobei ein Wärmetauscher mit der Zuführung (5; 112) verbunden ist, die mit der Außenluft verbunden ist.

6. System nach Anspruch 5, wobei die Zuführung den Eingang eines Kanals mit einem darin befindlichen Wärmetauscher (11, 12) zur Passage eines Luftstroms bildet.

7. System nach Anspruch 6, wobei der Luftstrom entlang der Membran (41) strömt.

8. System nach zumindest einem der Ansprüche 5 und 6 und 7, des Weiteren umfassend einen Impeller (10), der mit der Zuführung verknüpft ist, zum Bereitstellen eines Volumenstroms der Außenluft an der Zuführung, der für einen Wärmetauscher (11, 12) ausreichend ist, entlang oder durch den Wärmetauscher zum Zweck des Extrahierens von Wärme und/oder Kälte aus diesem.

9. System nach zumindest einem der vorhergehenden Ansprüche, wobei die Batterie gewählt ist aus der Gruppe mit: Bleisäurebatterien, Natrium-Schwefel-(NAS)-Batterien, Zink-Brom-Flow-Batterien, Vanadium-Redox-Flow-Batterien, Metall-Luft-Batterien; regenerative Redox-Flow-Brennstoffzellen (3; 102).

10. System nach einem der vorhergehenden Ansprüche, wobei dem Elektrolyt ein Additiv hinzugefügt ist, wobei das Additiv gewählt ist aus der Gruppe mit: Glycerol, Manitol, Fruktose und D-Sorbitol.

11. System nach einem der vorhergehenden Ansprüche, wobei die Brennstoffzelle eine ionenselektive Membran umfasst.

## Revendications

1. Système comprenant :
- une batterie à base d'électrolyte, telle qu'une pile à combustible qui peut être régénérée (3 ; 102) ;
- au moins un stockage d'électrolyte (47 ; 103) à partir duquel s'écoule l'électrolyte, en fonctionnement, le long d'une membrane (41) dans la batterie ;
- au moins un échangeur de chaleur (61 ; 62, 105 ; 107 ; 108) dans le ou les stockages d'électrolyte ;
- une pompe à chaleur (2, 111) dotée d'un compresseur (32) entraîné par un moteur électrique ;
**caractérisé en ce que** :
- le ou les échangeurs de chaleur (61 ; 62, 105 ; 107 ; 108) sont connectés à la pompe à chaleur (2 ; 111), laquelle pompe à chaleur (2 ; 111) est connectée à une source thermique (60 ; 112) de façon à chauffer ou à refroidir le stockage dans l'électrolyte, et dans lequel la pompe à chaleur (2 ; 111) est en outre connectée à un dispositif d'utilisation utile de la chaleur ou du froid (63 ; 106) qui utilise la chaleur ou le froid extrait à partir du ou des stockages par le ou les échangeurs de chaleur et pompe à chaleur combinés ; et
- le moteur électrique du compresseur (32) de la pompe à chaleur (2 ; 111) est un moteur à courant continu, et est connecté de manière électrique à la batterie (3 ; 102), dans lequel la batterie fournit une alimentation électrique en courant continu au moteur électrique à courant continu du compresseur (32) de la pompe à chaleur (2 ; 111).

2. Système selon la revendication 1, dans lequel le ou les échangeurs de chaleur peuvent au moins être connectés par l'intermédiaire de la pompe à chaleur (2 ; 111) à un élément chauffant qui forme une utilisation utile de la chaleur, telle qu'un radiateur (106).

3. Système selon la revendication 1 ou 2, dans lequel le ou les échangeurs de chaleur peuvent au moins être connectés par l'intermédiaire de la pompe à chaleur (2; 111) à un dispositif d'approvisionnement en eau chaude qui forme une utilisation utile de la chaleur, telle qu'une douche (63).

4. Système selon l'une quelconque des revendications précédentes, dans lequel le ou les échangeurs de chaleur sont connectés par l'intermédiaire de la pompe à chaleur (2 ; 111) à la source thermique, telle qu'un panneau solaire thermique (60).

5. Système selon l'une quelconque des revendications précédentes comprenant en outre un dispositif d'alimentation, dans lequel un échangeur de chaleur est connecté au dispositif d'alimentation (5 ; 112) connecté à l'air extérieur.

6. Système selon la revendication 5, dans lequel le dispositif d'alimentation forme l'entrée d'un canal qui présente à l'intérieur un échangeur de chaleur (11, 12) pour le passage d'un flux d'air.

7. Système selon la revendication 6, dans lequel le flux d'air s'écoule le long de la membrane (41).

8. Système selon l'une quelconque des revendications 5 à 7, comprenant en outre une roue à aubes (10) associée au dispositif d'alimentation destinée à fournir au niveau du dispositif d'alimentation un débit d'air extérieur suffisant pour un échangeur de chaleur (11, 12) le long de, ou à travers l'échangeur de chaleur de façon à extraire de celui-ci la chaleur et / ou le froid.

9. Système selon l'une quelconque des revendications précédentes, dans lequel la batterie est l'une de celles qui appartient au groupe constitué par : des batteries plomb - acide, des batteries sodium - soufre (NAS), des batteries à flux de bromure de zinc, des batteries à flux redox de vanadium, des batteries métal - air, des piles à combustible régénératives à flux redox (3 ; 102).

10. Système selon l'une quelconque des revendications précédentes, dans lequel un additif est ajouté à l'électrolyte, l'additif étant pris dans le groupe constitué par : un glycérol, un mannitol, un fructose et un D - sorbitol.

11. Système selon l'une quelconque des revendications précédentes, dans lequel la pile à combustible comprend une membrane à ions sélectifs.
